Europäisches Patentamt

European Patent Office

Office européen des brevets

(19)

(11) Publication number: **0 166 220**
A2

# (12) EUROPEAN PATENT APPLICATION

(21) Application number: 85106387.5

(22) Date of filing: 23.05.85

(51) Int. Cl.⁴: **G 06 F 12/06**

(30) Priority: 28.05.84 JP 106362/84

(43) Date of publication of application: 02.01.86
Bulletin 86/1

(84) Designated Contracting States: DE FR GB

(71) Applicant: HITACHI, LTD., 6, Kanda Surugadai 4-chome Chiyoda-ku, Tokyo 100 (JP)

(72) Inventor: Osako, Kazuyoshi, 1494-38, Nagasakucho, Chiba-shi (JP)
Inventor: Fujiwara, Katsuhiro, 39-3-204, Narashinodai-5-chome, Funabashi-shi (JP)

(74) Representative: Patentanwälte Beetz sen. - Beetz jun. Timpe - Siegfried - Schmitt-Fumian, Steinsdorfstrasse 10, D-8000 München 22 (DE)

(54) **Digital data processing device with address allocation means.**

(57) This invention discloses a digital data processing device, which allocates addresses to the circuits included in the form of a unit in each of a plurality of assembled units, comprising a plurality of input circuits (IU), output circuits (OU), or both of them and in which each of the assembled units comprises a means (1) for memorizing the reference address allocated to the relevant assembled unit, a means (2) for setting the number of circuits assembled in the relevant assembled unit, and a means (3) for calculating the reference address for the assembled unit in the succeeding stage on the basis of the content of the two means, in order that addresses are automatically allocated to the circuits assembled in each of the assembled units.

DIGITAL DATA PROCESSING DEVICE

BACKGROUND OF THE INVENTION

FIELD OF THE INVENTION

This invention relates to a digital data processing device, such as a control device, for example a control device storing control programs in a memory and carrying out predetermined control on the basis of the content of this memory or in general an electronic computer, etc. and in particular to address allocation for a plurality of input and output devices or input/ output devices having both the functions, which are connected to that control device or the principal part of the electronic computer.

DESCRIPTION OF THE PRIOR ART

A control device or more generally an electronic computer, which stores control programs in the memory portion, reads out successively the contents stored therein and carries out predetermined controls depending thereon, controls and operates a plurality of external output devices and so forth on the basis of input signals coming from a plurality of input devices and so forth. A central processing device constituting the principal portion of the body controlling and operating these external devices and so forth takes in input signals coming from these input devices or signals representing

0166220

the state of the external output devices and so forth, depending on the programs stored in the memory portion, and controls and operates the external output devices and so forth so that they are in predetermined states, depending on the program. As is well known, in this sort of techniques, owing to the progress of the electronic techniques, the processing capacity is considerably increased. Thus, the number of parts of input/output signals has reached several tens, several hundreds or several thousands. In this sort of fields, take-in of input signals according to the program and output of output signals, which are results of the processing, are carried out as follows. That is, different addresses are allocated to different input/output devices; input/ output signals are taken in according to the program; and sending out of output signals is effected by selecting an arbitrary one among a number of said addresses depending on address assignment information coming from the control processing device according to the program. In other words, these devices select desired input/output devices and so forth depending on address assignment information according to the program; take in state signals of these devices and so forth; and send out processing results to desired output devices and so forth, which are selected depending on the address assignment information.

The number of parts in the circuits dealing with such input/output signals as described above varies

- 3 -

depending on the scale of the whole apparatus and these circuits are successively added, as the scale increases. Heretofore this addition is effected as follows. That is, these circuits are not added one after another, but a predetermined number of circuits, e.g. 4, 8, 16 circuits, are put together in one unit and added in the form of this assembled unit. Such an assembled unit is generally called "module" and it is so constructed that it can be connected to the principal part of the apparatus in general by means of standard connecting means, such as connectors. Each of such connecting means is called in general "slot" and an apparatus is provided with a number of such slots. A module is inserted in each of the slots, and in this way every circuit in every module is connected with the central processing device through an address bus, a data bus, or other signal lines. There are known various methods for address allocation to the circuits in these numerous modules. For example, refer to Japanese Patent Laid-Open Publication Nos. 125378/79 and 84186/79.

However, in the traditional devices, the number of circuits in each of modules was fixed, that is, addition of circuit was restricted to that of either one of 4-part-, 8-part- or 16-part-units, and it has never been studied to add a module having an arbitrary number of circuit parts by inserting it in a slot without deciding the position of the slot. This is because this makes the address allocation difficult

- 4 -

0166220

or very troublesome.

SUMMARY OF THE INVENTION

The object of this invention is to provide a digital data processing device, in which assembled units including an arbitrary number of circuits can be arranged without restricting the connection position with respect to the principal part of the apparatus and addresses are allocated automatically to the circuits included in the assembled units.

In order to achieve this object, this invention is characterized in that successive addresses are allocated to a plurality of circuits in assembled units and that the assembled units are so arranged that the address used next to the last address in the assembled unit arranged in a preceeding stage among the plurality of them is allocated to the first circuit in the assembled unit in the succeeding stage. This means that the assembled units are mounted successively in the slots disposed successively for connecting them to the principal part of the apparatus and doesn't mean that assembled units having a determined number of parts are mounted to determined slots, but their mounting position is arbitrarily selected. Each of the assembled units comprises a reference address memory means for storing an inputted reference address by application of predetermined timing signals, a circuit number setting means for setting at least a value corresponding to the number of circuits included in a relevant assembled unit, a reference address operation means for calculating and outputting the reference address of the assembled unit arranged in the stage next to said relevant assembled unit on the basis of the content of said reference address memory means and that of said circuit number setting means, a timing signal generating means for sending out a timing signal of predetermined timing to said assembled unit arranged in the succeeding stage at least after termination of the calculation, and an address judgement means for judging if an address assignment information coming from the central processing device is an information assigning said assembled unit or not, on the basis of the content of said reference address memory means and that of said circuit number setting means.  Owing to this construction the reference address of each of the assembled units can be calculated automatically and stored successively in the reference address memory means for each of the assembled units. As the result, an address is allocated to each of the circuits in the assembled units.

BRIEF DESCRIPTION OF THE DRAWINGS

Fig. 1 is a block diagram showing the outline of whole of a sequence control apparatus;

Fig. 2 is a scheme showing an example of arrangements of assembled units;

Fig. 3 is a block diagram showing the state of connection between the principal part of the apparatus and the assembled units;

Fig. 4 is a block diagram illustrating an example of this invention;

Fig. 5 is a block diagram representing an example of timing signal formation circuits;

Fig. 6 is a timing chart showing signals at various parts in Fig. 5;

Fig. 7 is a block diagram showing an example of functional circuits in the assembled units; and

Fig. 8 is a flow chart for explaining the processing operation in the principal part of the apparatus.


DESCRIPTION OF THE PREFERRED EMBODIMENTS

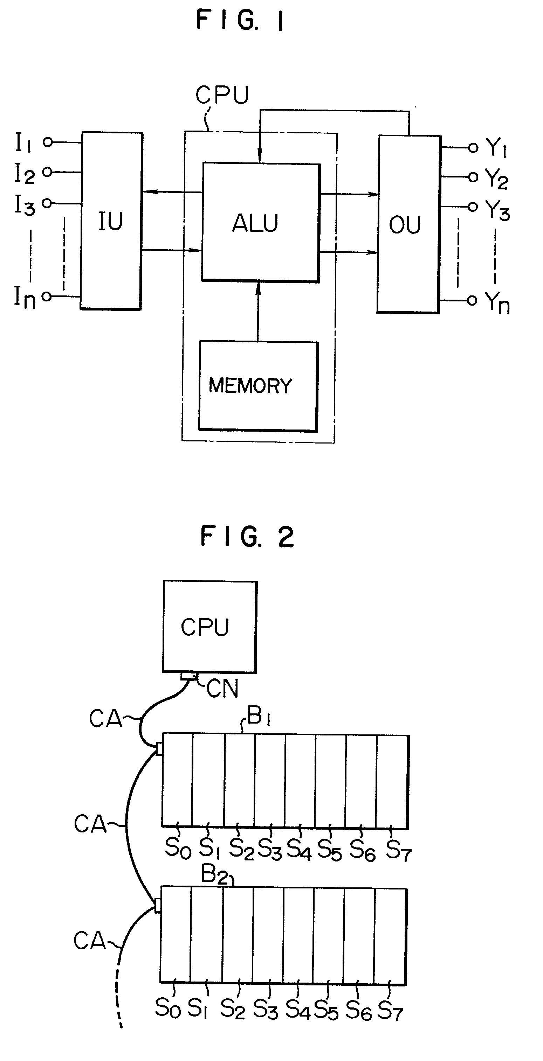

Hereinbelow an embodiment of this invention will be explained. This embodiment shows a sequence control apparatus, in which a control program forming a relay sequence by using a corresponding command language is stored in the memory part and predetermined control is carried out while reading out successively this control program. Fig. 1 is a schematical view of the whole apparatus and this invention will be explained, referring to this figure. $I_1$, $I_2$, $I_3$, ..., $I_n$ denote input terminals, to which input devices, such as push button switches, operation switches, limit switches, etc., are connected and $Y_1$, $Y_2$, $Y_3$, ..., $Y_n$ represent output terminals to which devices to be controlled, such as electromagnetic breakers, valves, indicators, etc., are connected. Central processor unit CPU is the principal part of the sequence control apparatus and provided with a memory part M and an operation processing part or arithmetic logical unit ALU. The apparatus includes an input module IU and an output module OU. In the construction stated above, the operation processing part ALU takes in successively state information on the input devices and the devices to be controlled from the input module IU and the output module OU according to the sequence control program, which is read out from the memory portion M, carries out operation processing according to the sequence control program, and stores processing results in the output unit OU according to the sequence program. The devices to be controlled connected to the output terminals $Y_1$, $Y_2$, $Y_3$, ..., $Y_n$ are so controlled according to the stored contents that they are in predetermined states. In this way the devices to be controlled are controlled according to the control program, depending on the states of the input devices.

Although the input module IU and the output module OU are indicated respectively as one unit device in the figure, in reality each of them consists of a plurality of modules. Each of this plurality of modules includes e.g. 4, 8 or 16 circuits corresponding to the input terminals $I_1$, $I_2$, $I_3$, ..., or e.g. 4, 8 or 16 circuits corresponding to the output terminals $Y_1$, $Y_2$,

$Y_3$, .... When the scale of the object to be controlled is enlarged, extension is effected in unit of this module. Fig. 2 shows the physical relation between the principal part of the sequence control apparatus CPU and the input module IU or the output module OU. That is, extension boards B1, B2 are successively connected to the principal part of the control apparatus CPU through a cable CA and a connector CN. Each of these extended boards B1, B2 is provided with a large number of slots, e.g. 8 slots $S_0$, $S_1$, $S_2$, $S_3$, ..., $S_7$. In each of these slots $S_0$, $S_1$, $S_2$, ..., $S_7$ is inserted an input or output module IU, OU including e.g. 4, 8, or 16 circuits and thus each module is connected with the principal part of the control apparatus CPU. Further, if necessary, extension boards, input or output modules IU, OU are added.

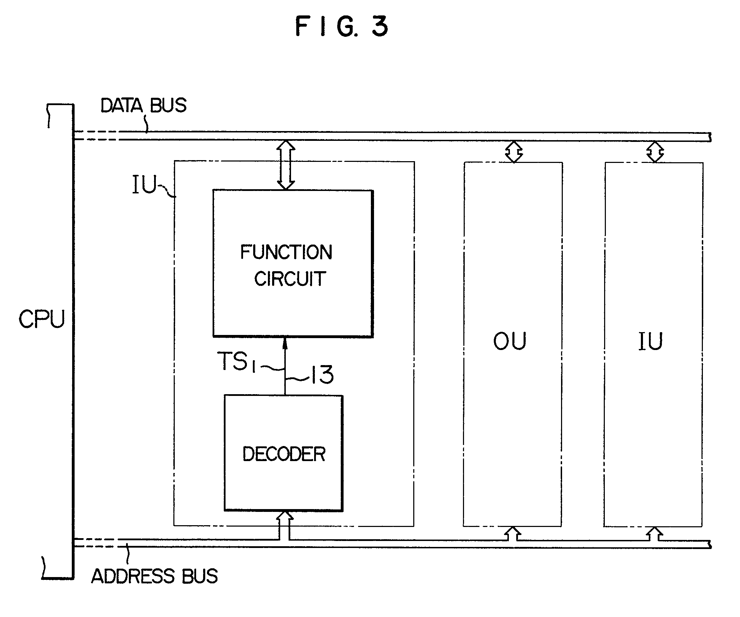

Fig. 3 is a scheme showing the electrical relation between the principal part of the sequence control apparatus CPU and the input module IU or the output module OU. That is, the principal part of the sequence control apparatus CPU and these modules IU, OU are connected through an address bus AB, a data bus DA, and other various sorts of signal lines, which are not indicated in the figure. This connection is effected by connector means, such as connectors, disposed at the slots $S_0$, $S_1$, ..., $S_7$, as stated above. The input module IU and the output module OU can be roughly divided into a decoder part DEC and a function circuit part FC.

The decoder part DEC inputs address assignment information sent by the principal part CPU through the address bus AB, judges if the module IU, OU has been assigned by the principal part CPU or not, and sends a selection signal $TS_1$ to the function circuit FC, when it is assigned. The function circuit FC is provided with a number of circuits, e.g. 4, 8, 16, etc., corresponding to input terminals $I_1$, $I_2$, $I_3$, ... or output terminals $Y_1$, $Y_2$, $Y_3$, ... previously determined by the module IU, OU and a circuit selected by the selection signal $TS_1$ on the basis of the address assignment information acts in a predetermined manner. That is, if the selected circuit is an input circuit, it sends a state signal for an input device, which is connected with the circuit through input terminals $I_1$, $I_2$, $I_3$, ..., to the principal part CPU through the data bus DB. On the other hand, if the selected circuit is an output circuit, it sends a state signal for an output device, which is connected with the circuit through output terminals $Y_1$, $Y_2$, $Y_3$, ..., to the principal part CPU through the data bus DB, or the circuit takes in data coming from the principal part CPU through the data bus DB and controls and operates the output device according to the data so that it is in a predetermined state.

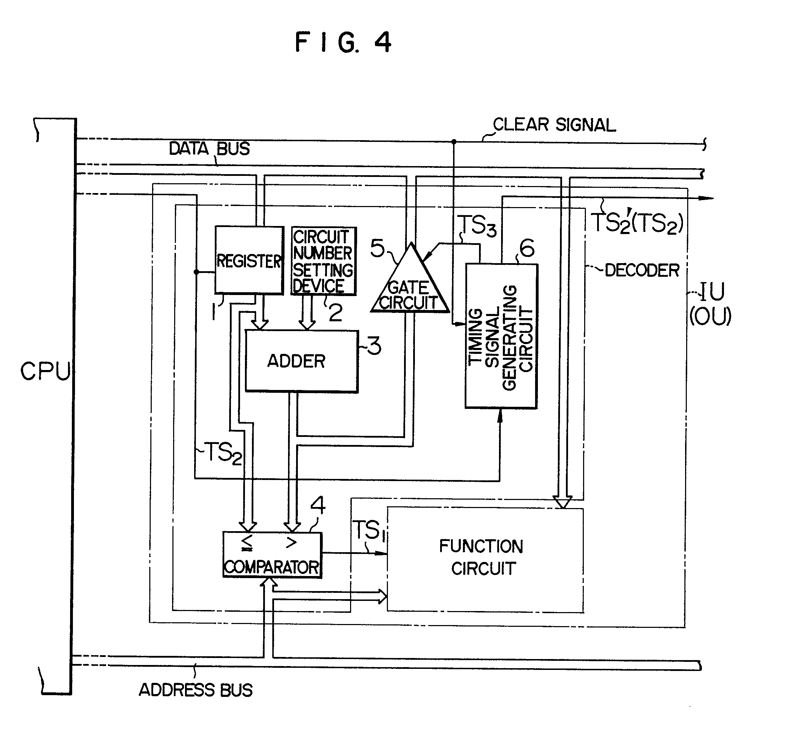

Fig. 4 is a block diagram showing the extracted decoder portion of each module IU, OU. The reference numeral 1 denotes a register constituting the reference address memory means, which takes in the reference address information coming through the data bus DB, stores it and outputs the memory content.

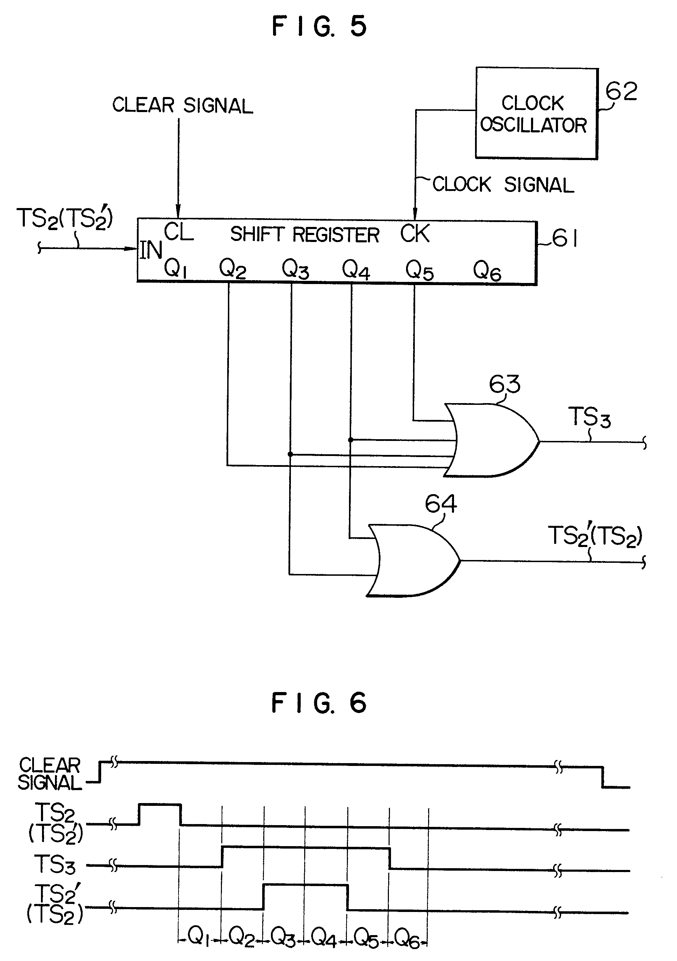

In this embodiment an address, which is to be allocated to the first circuit among those included in the module, is selected as the reference address set and stored in the register 1 in each module. The reference numeral 2 represents a circuit number setting device for setting the number of addresses used in the module, i.e. the number of circuits, for which e.g. a digital switch, etc. can be utilized. The number of circuits in each module is determined in a fabrication or modification step for the module. Consequently, the number of circuits can be set at this time for the circuit number setting device 2. The setting value for the circuit number setting device 2 can be shown, as follows. That is, in the case where the module includes 4 circuits, the setting value is "4". In the same way, the setting value is "8" for a module including 8 circuits and it is "16" for a module including 16 circuits, and so forth. The reference numeral 3 indicates an adder constituting a reference address operation means, which adds the memory content in the register 1 to the setting value of the circuit number setting device 2 and outputs the value thus obtained as the reference address for the module disposed in the succeeding stage. The reference numeral 4 indicates a comparator constituting an address judgement means, which judges if the address assignment information put by the principal part of the control device CPU on the address bus AB is an information for selecting a circuit in the relevant module or not. That is, the comparator 4 takes in the address assignment information coming through the address bus AB, the reference address stored in the register 1 and the sum coming from the adder 3 and outputs a selection signal $TS_1$, when it judges that the relevant module is selected by the fact that the address assignment information is greater than the reference address and smaller than the sum. When it is outside of this condition, the comparator 4 judges that the relevant module is not assigned and outputs no selection signal $TS_1$. The reference numeral 5 designates a gate circuit, through which the reference address information for the module in the succeeding stage, which is the output of the adder 3, is outputted to the data bus DB. As it is clear here, the reference address stored in the register 1 is the reference address obtained when the output of the adder 3 disposed in the module located in the stage preceeding the relevant module is outputted through the gate circuit 5 to the data bus DB. The reference numeral 6 indicates a timing signal generating circuit, which generates a signal controlling opening and shutting of the gate circuit 5 and memory timing for the register 1 disposed in the module located in the stage succeeding the relevant module. Fig. 5 is a block diagram showing a concrete example of the timing signal generating circuit 6. Hereinbelow the timing signal generating circuit 6 will be explained, referring to this figure, which shows a timing signal generating circuit 6 consisting of a shift register 61, a clock oscillator 62, OR circuits 63 and 64. That is, this is a circuit, in which an input signal $TS_2$ is successively shifted by clock signals in the shift register 61 and determined timing signals $TS_2'$, $TS_3$ are generated by combining rationally signals coming from output terminals $Q_1$, $Q_2$, ..., $Q_6$ in the OR circuits. For this purpose, a timing signal $TS_2$ memorizing the reference address in the register 1 in the relevant module is inputted in the input terminal IN of the shift register 61. This signal $TS_2$ is, as explained later, a signal outputted by the OR circuit 64 in the timing signal generating circuit 6 disposed in the stage preceeding the relevant module. Clock signals CKS outputted with a constant time interval by the clock oscillator 62 are inputted in the clock terminal CK. This signal results in the shift signal. A clear signal CLS is sent out from the principal part of the sequence control apparatus CPU at the beginning of the address allocation period explained later and the shift register 61 disposed in each module is cleared by this signal CLS at the beginning point of time. That is, the shift register 61 is cleared by the clear signal CLS and after that, when the timing signal $TS_2$ is inputted in the input terminal IN, this signal $TS_2$ is successively shifted from the output terminal $Q_1$ toward the output terminal $Q_6$ by clock signals CKS.

The OR circuit 63 takes in signals coming from the output terminals $Q_2$, $Q_3$, $Q_4$, $Q_5$ of the shift register 61 and forms an opening signal $TS_3$ for the gate circuit 5. The OR circuit 64 takes in signals coming from the output terminals $Q_3$, $Q_4$ of the shift register 61 and generates the timing signal $S_2$ inputted in the register 1 in the module disposed in the stage succeeding the relevant module and in the input terminal IN of the shift register 61 in the timing signal generating circuit 6. Fig. 6 is a timing chart therefor. In this figure, a timing chart of the clear signal CLS, the timing signal $TS_2$, the gate opening signal $TS_3$, and the timing signal $TS_2'$ is shown. $Q_1$, $Q_2$, $Q_3$, ..., $Q_6$ represent periods during each of which a signal is outputted by corresponding one of the output terminals $Q_1$, $Q_2$, $Q_3$, ..., $Q_6$ of the shift register 61.

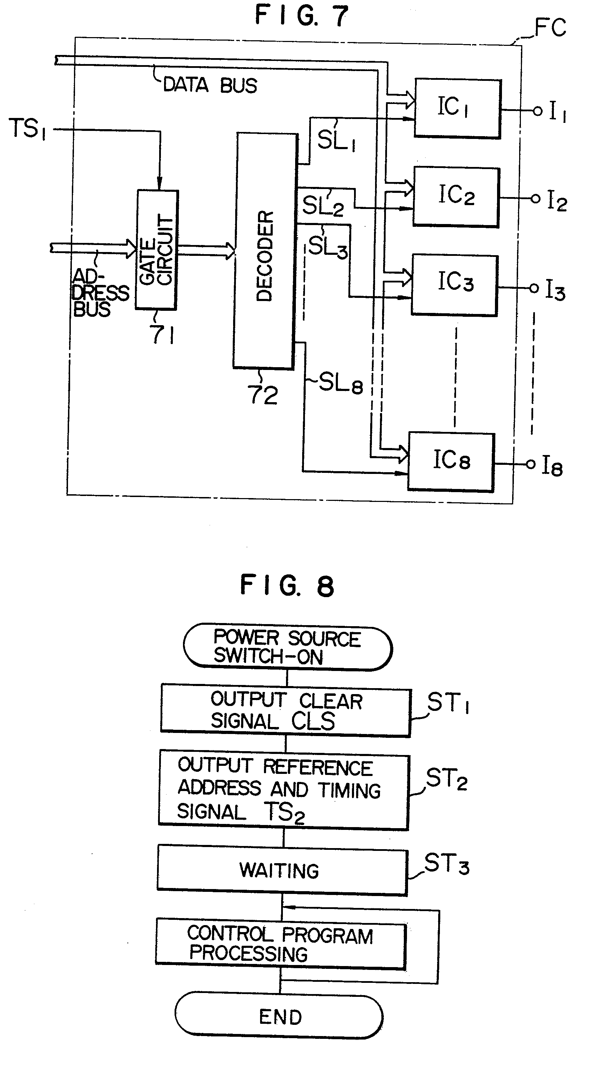

Fig. 7 illustrates an example of functional circuits FC having the input function and provided with 8 circuits. $IC_1$, $IC_2$, $IC_3$, ..., $IC_8$ are input circuits, which are connected with the input terminals $I_1$, $I_2$, $I_3$, ..., $I_8$. The reference numeral 71 designates a gate circuit and 72 a decoder. The gate circuit 71 receives address assignment information from the address bus AB, opens the gate on the basis of selection signals coming from the comparator 4, and inputs the address assignment information on the address bus AB in the decoder 72. When the decoder 72 receives the address assignment information, the decoder decodes it and sends out a selection signal $SL_1$, $SL_2$, $SL_3$, ..., or $SL_8$ to a circuit specified by the address assignment information among the circuits $IC_1$, $IC_2$, $IC_3$, ..., $IC_8$. An input circuit $IC_1$, $IC_2$, $IC_3$, ... or $IC_8$ receiving this selection signal $SL_1$, $SL_2$, $SL_3$, ... or $SL_8$, e.g. opens the gate on the basis of this signal and outputs a state signal of the input device connected to the corresponding input terminal $I_1$, $I_2$, $I_3$, ... or $I_8$ in the data bus DB. In addition, in Fig. 7, although a circuit having the input function has been explained, a circuit having the output function is almost identical to it. Since only a difference is that the $IC_1$, $IC_2$, $IC_3$, ..., $IC_8$ have the output function and the portion relating to the address assignment is the same, explanation of this circuit is omitted. Further, concerning the number of circuits, since only the number of selection outputs of the decoder 72 varies, explanation in more detail is omitted.

The input and output modules IU, OU constructed as described above are successively inserted into the slots $S_0$, $S_1$, $S_2$, ..., $S_7$ of the boards B1, B2 and connected to the principal part of the control apparatus CPU. The modules are inserted into the slots $S_0$, $S_1$, $S_2$, ..., $S_7$ of the board B1 in this order and then into the slots $S_0$, $S_1$, $S_2$, ..., $S_7$ of the board B2 in this order. In this way, the timing signals $TS_2'$ are successively applied to the modules in the following stages. Timing signals $TS_2$, reference address information and clear signals CLS to the module connected to the slot $S_0$ of the module, which is the closest to the principal part of the control apparatus CPU, i.e. the board B1, among those thus arranged, are supplied by the principal part of the control apparatus CPU. In a digital data processing device the address domain, in which input/output devices are arranged, is previously determined. Consequently, for the automatic allocation according to this embodiment, the principal part of the control apparatus CPU outputs the first address of this previously determined address domain as the reference address at the beginning point of time and outputs also a timing signal $TS_3$ with the same timing. A clear signal CLS is of course outputted therebefore.

Fig. 8 is a flow chart showing the processing action of the principal part of the control apparatus CPU concerning the automatic address allocation for each module. Since the register 1 disposed in each module is provided with the memory function, the figure illustrate a case where this automatic address allocation is carried out once after switch-on of the power supply. Programs concerning such a processing action are stored previously in a memory device of the principal part of the control apparatus, more preferably in a memory device holding its content even during break down of the power source. Hereinbelow, the automatic address allocation action will be explained, referring to Fig. 8. At first, when the power source is switched-on, by the step

$ST_1$, the principal part of the control device CPU outputs a clear signal CLS. By this signal all the shift registers 61 disposed in the timing signal generating circuits 6 of the modules are cleared. After that, by the step $ST_2$, the principal part of the control apparatus CPU outputs a reference address signal to the data bus. This reference address signal is the first address of the address domain, which is allocated as input/output, as stated above. Almost at the same time it outputs a timing signal $TS_2$. In this way, the module closest to the principal part of the control apparatus CPU stores the relevant reference address in the register 1 on the basis of the timing signal $TS_2$. A number of circuits to be mounted is set previously in the circuit number setting device 2. Consequently, the reference addresses coming from the principal part of the control apparatus are inputted through the data bus DB in all the modules. However, since the timing signal $TS_2$ is transmitted to the modules one after another through the timing signal generating circuit 6 in every arranged module, at a certain point of time, the reference address coming from the principal part of the control apparatus CPU is stored only in a relevant module. In the circuit number setting device 2 of the module is set previously a number of circuits to be mounted. Consequently, when the register 1 memorizes this reference address, the adder 3 adds the reference address set in the register 1 and the value set in the

- 17 -

0166220

circuit number setting device 2, and outputs the sum thus obtained. When the reference address is taken in by the register 1, outputs of the reference address and the timing signal $TS_2$ coming from the principal part of the control apparatus CPU disappear. However, the timing signal $TS_2$ is taken in the shift register 61 in the timing signal generating circuit 6. As indicated in Fig. 6, the timing signal generating circuit 6 outputs a timing signal $TS_3$ with a predetermined timing after the termination of the addition operation by the adder 3. When this signal $TS_3$ is outputted, the gate circuit 5 opens and the output of the adder 3 is sent out to the data bus DB as the reference address for the module arranged in the succeeding stage. After that, the timing signal generating circuit 6 outputs the timing signal $TS_2$. Then, the reference address, which is the output of the adder 3, is the timing signal $TS_2'$. This signal $TS_2'$ is the timing signal $TS_2$ for the modules in the succeeding stage, and this reference address is stored in the register 1 of the module in the succeeding stage. Thereafter, in the same way, this module in the succeeding stage sends out the reference address stored in the register 1 and the value set in the circuit number setting device 2 of the module to the module arranged in the succeeding stage, and also the timing signal $TS_2'$ with the same timing. In this way, predetermined reference addresses are stored one after another in the registers 1 in every module. Hereinbelow a concrete example is shown as follows.  That is, it is supposed that modules comprising 8, 4, 16 and 8 circuits, respectively, are arranged in this order, when they are counted from the side close to the principal part of the control apparatus CPU, and further that the input/output addresses are allocated, starting from No. 100.  Further, for convenience of explanation the address is represented in the decimal system.  Then, the principal part of the control apparatus CPU outputs "100" as the reference address.  Of course, "8", "4", "16" and "8" are set in the circuit number setting device of the 8-, 4-, 16- and 8-circuit module, respectively. Consequently, in the register 1 of the module arranged in the first stage is stored "100" and in the register 1 of the module in the succeeding stage is stored "108". In the following stages "112" and "128" are memorized in the order indicated above.

Input/output modules IU, OU are successively added to the principal part of the control apparatus CPU, depending on the scale of the object to be controlled. However, the number of added modules is limited by the capacity of the principal part CPU.  Further, allocation time for each of the modules can be previously determined.  After the terminal of the step $ST_3$, the principal part of the control apparatus CPU effects a waiting process during a period of time which will be necessary for the address allocation to all the modules.  The step $ST_3$ indicates this process.  Furthermore, in the above, it was a waiting process that was effected in the step $ST_3$, but this process can be replaced by another way, for example, by the way by which the principal part of the control apparatus CPU reads out the timing signal $TS_2'$ from the module arranged in the last stage and it is verified in this manner that the address has been allocated to all the modules. Further sending out the reference address to the module arranged in the succeeding stage is effected by using the data bus DB. Consequently, it is also possible to verify by the value obtained, when the principal part of the control apparatus CPU reads out successively the data on the data bus DB, that the reference addresses have been stored in all the modules. In any case, after that the reference addresses have been stored by the step $ST_3$ in all the modules, the principal part of the control apparatus CPU carries out repeatedly the control program for the ordinary relay-sequence previously stored.

The principal part of the control apparatus CPU puts address assignment information on the address bus AB by effecting the control program according to the command content of the control program. This address assignment information is inputted in all the modules. In this way, each module compares the relevant address assignment information with the content of the register 1 and the content of the output of the adder 3 by means of the comparator 4. As the result, when this address assignment information is greater than the content of the register 1 and smaller the content of the output of the adder 3, the comparator 4 judges that its module has been selected.  Then, it outputs a selection signal $TS_1$ and the module sends out the data from the circuits $IC_1$, $IC_2$, $IC_3$, ... specified by the relevant address assignment information to the principal part of the control apparatus CPU or takes in data from the principal part of the control apparatus CPU.

As described above, according to the process of this embodiment, it is possible to arrange modules comprising an arbitrary number of circuits one after another at the slots $S_0$, $S_1$, $S_2$, ..., $S_7$ for connecting modules with the principal part of the control apparatus CPU without any restriction in their position and in addition to effect automatically the address allocation for each of the modules.  In general, the external form of input/outout modules is standardized.  Consequently, the number of circuits, which can be mounted in this determined space, is limited, corresponding to the functions with which the modules are provided.  That is, the number varies from several to several tens, depending on the type of the modules.  Heretofore, since the number of circuits in a module was constant independently of its function, its design was restricted and the number of modules is unified to a smaller one.  Consequently, in general, a module comprising more circuits and having relatively low function is comparatively

high in cost. According to this embodiment, any module can be designed and fabricated without any restriction and as the result it is possible to obtain the effect to fabricate a module inexpensively as a whole.

In the embodiment described above, sending out the reference address to the module in the succeeding stage is effected by using the data bus, but it can be replaced by exclusive lines disposed separately. However, when a data bus is used, since such exclusive lines are not necessary, the apparatus can be made cheaply. Furthermore, in the embodiment described above, the invention has been explained for the case where successive addresses are allocated to successive modules, i.e. where the address next to the last allocated address of one module is allocated to the first circuit of the module arranged in the succeeding stage. However, depending on arranged modules, unused addresses can be arranged between the last address of a module and the address allocated to the first circuit of the module in the succeeding stage. This can take place for convenience of use or by a reason in the design. The "successive addresses" in this invention comprises this case, i.e. the word "successive" means "successive" for the addresses used. Further, in this case, the number of addresses comprising those, which are not used, is set in the circuit number setting circuit 2. That is, in this case, the number of circuits mounted really on a module is not identical to this set number, but it

- 22 -          0166220

should be understood that the number of circuits in this invention is so defined that it comprises also those which are not used.

Moreover, although in the embodiment described above the case, where the addresses of the modules are allocated according to the order of increasing numbers, seen from the side of the principal part of the control apparatus CPU, has been explained, these can be allocated also according to the order of decreasing numbers. These two methods can be used conveniently, as the need arises. For example, in the case where they are allocated according to the order of decreasing numbers, it will be sufficient to replace the adder 3 by a subtracter, etc. and to allocate the last address for the relevant module to the register 1. Further, the comparison condition for the comparator 4 should be changed accordingly. In addition, although the address allocated to the first circuit of the relevant module has been set in the register 1, it can be the address allocated to the last circuit that is set in it. It can be also an arbitrary one, which is different from the two. That is, in the embodiment described above, which address is stored in the reference address memory means constituted by the register 1 depends on the construction of the circuit number setting means, the reference address setting means and the address setting means, etc. What is essential is that it is an address which can specify the relevant module.

Furthermore, it is evident that the technical teach of this invention can be widely utilized generally for any digital data processing device, including electronic computers, etc., although a sequence control device has been explained as an example in the embodiment described above.

As clearly explained above, according to this invention, a digital data processing device can be obtained, by which assembled units including an arbitrary number of circuits can be arranged without any restriction of their connection position with respect to the principal part of an apparatus and addresses are allocated automatically to the circuits included in the assembled units.

CLAIMS:

1. In a digital data processing device, provided with a plurality of assembled units, each of them including a predetermined number of circuits, to which addresses different from each other are allocated and which are assembled in the form of a unit, in which, depending on address assignment information coming from the central processing part (CPU), the circuits assigned by said address assignment information and said central processing part (CPU) transmit information to each other, the improvement wherein it comprises further:

a reference address memory means (1) storing an inputted reference address by application of predetermined timing signals in each of said assembled units, successive addresses being allocated to said plurality of circuits in said assembled units, which are so arranged that the address used next to the last address in the assembled unit arranged in a preceeding stage among the plurality of them is allocated to the first circuit in the assembled unit in the succeeding stage;

a circuit number setting device (2) for setting at least a value corresponding to the number of circuits included in a relevant assembled unit;

a reference address operation means (3) for calculating and outputting the reference address of said assembled unit arranged in the stage next to

- 2 - 0166220

said relevant assembled unit on the basis of the content of said reference address memory means (1) and that of said circuit number setting means (2);

a timing signal generating means (6) for sending out a timing signal of predetermined timing to said assembled unit arranged in the succeeding stage at least after termination of the calculation; and

an address judgement means (4) for judging if an address assignment information coming from the central processing device (CPU) is an information assigning said assembled unit or not, on the basis of the content of said reference address memory means and that of said circuit number setting means (2).

2.  Digital data processing device according to Claim 1, wherein the reference address memory means (1) in each of the assembled units stores the address allocated to the first circuit of the relevant assembled unit.

3.  Digital data processing device according to Claim 1, wherein the value corresponding to the number of circuits included in said relevant assembled unit is set in the circuit number setting means (2) in each of the assembled units.

4.  Digital data processing device according to Claim 1, wherein the reference address operation means (3) in each of the assembled units is constituted by an adder (3).

5.  Digital data processing device according to Claim 1, wherein the reference address memory means (1) stores the address allocated to the first circuit in the relevant assembled unit; the value corresponding to the number of circuits included in the relevant assembled unit is set in the circuit number setting means (2); and the reference address operation means calculates the reference address of the assembled unit arranged in the succeeding stage by adding the address allocated to the first circuit in the assembled unit memorized by said reference address memory means (1) and the number of circuits included in said relevant assembled unit set in said circuit number setting means (2) by means of an adder (3).

6. Digital data processing device according to Claim 1, wherein the reference address operation means (3) is constituted by an adder and the address judgement means (4) judges if the address assignment information coming from the central processing part CPU is greater than the value stored in the reference address memory means (1) and smaller than the outputted value of said adder or not.

7. Digital data processing device according to Claim 1, wherein the reference address inputted in the assembled unit arranged in the first stage and the timing signal come from the central processing part CPU.

8. Digital data processing device according to Claim 1, wherein the reference address is supplied through the data bus connecting each of the assembled units with the central processing device (CPU).

## F I G. 1

## F I G. 2

## F I G. 3

DATA BUS

CPU

IU

FUNCTION CIRCUIT

$TS_1$ ~ 13

DECODER

OU

IU

ADDRESS BUS

FIG. 4

## FIG. 5

CLOCK OSCILLATOR | 62

CLEAR SIGNAL

CLOCK SIGNAL

$TS_2(TS_2')$

| IN | CL | SHIFT REGISTER | CK | | 61 |
| $Q_1$ | $Q_2$ | $Q_3$ | $Q_4$ | $Q_5$ | $Q_6$ |

63

$TS_3$

64

$TS_2'(TS_2)$

## FIG. 6

CLEAR SIGNAL

$TS_2$ $(TS_2)$

$TS_3$

$TS_2'$ $(TS_2)$

$Q_1$ $Q_2$ $Q_3$ $Q_4$ $Q_5$ $Q_6$

5/5

# FIG. 7

# FIG. 8